# EUROPEAN PATENT APPLICATION

(11) **EP 2 400 755 A1**
(43) Date of publication of application: **28.12.2011**
(21) Application number: 11170911.9
(22) Date of filing: 22.06.2011
(51) Int. Cl.: H04N 7/18

(54) **Remote inspection device**

(30) Priority: 24.06.2010 US 358185 P
(71) Applicant: Black & Decker Inc., Newark, Delaware 19711 (US)
(72) Inventor: Watts, Fred S., New Freedom, PA Pennsylvania 17349 (US); Wojcicki, Andrzej, Rosedale, MD Maryland 21237 (US); Bascom, James, Bel Air, MD Maryland 21015 (US); Potter, Christine, Phoenix, MD Maryland 21131 (US); Ng, Francis C., Baltimore, MD Maryland 21239 (US)
(74) Representative: Bell, Ian Stephen

(57) **Abstract**

A remote inspection device is disclosed. The device has an imager housing with an imager device, a grip housing, a cable connecting the imager and grip housings, a display housing removably attached to the grip housing, and a power tool battery pack removably attached to the grip housing. The display housing includes a battery and a display for showing images generated by the imager device. The battery may be charged by the power tool battery pack.

## Description

The present application relates to remote inspection devices and more particularly video scopes.

The present application discloses a remote inspection device with an imager housing, a grip housing, a cable connecting the imager and grip housings, a display housing removably attached to the grip housing, and a power tool battery pack removably attached to the grip housing. The display housing includes a display for showing images generated by the imager housing and a battery. The battery may be charged by the power tool battery pack.
FIG. 1 is a side view of an exemplary inspection device;
FIG. 2 is a block diagram of the major components which comprise the inspection device of FIG. 1;
FIG. 3 is a side view of the imager housing;
FIG. 4 is a perspective view of the display housing;
FIG. 5 is a partial cross-sectional exploded view of a second embodiment of the connectors 16F, 16M; and
FIG. 6 is a perspective view of the connectors 16F, 16M of FIG. 5.

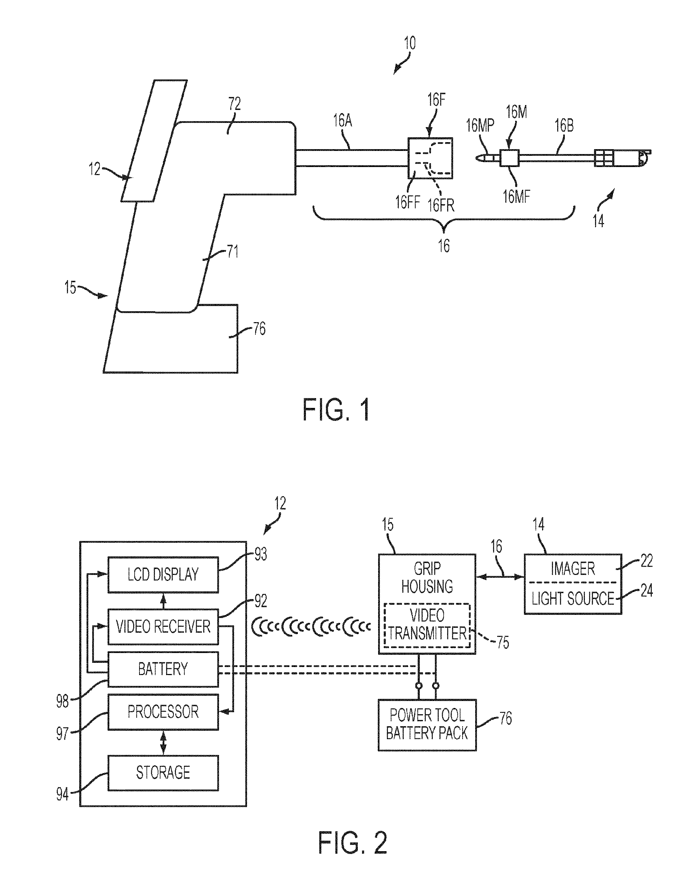

The teachings of US Publications Nos. 2006/02811972, 2007/0117437 and 2009/0167851 are hereby wholly incorporated herein via reference. FIG. 1 illustrates an exemplary embodiment of a remote inspection device 10. The remote inspection device 10 preferably has four primary components: a display housing 12, an imager housing 14, a grip housing 15 and a cable 16 interconnecting the display housing 12 to the grip housing 15.

The cable 16 is preferably flexible and may be bent or curved as it is pushed into visually obscured areas, such as pipes, walls, etc. In an exemplary embodiment, the cable 16 is a ribbed cylindrical conduit having an outer diameter in the range of 1 cm. The conduit can be made of either a metal, plastic or composite material. Smaller or larger diameters may be suitable depending on the application. Likewise, other suitable constructions for the cable 16 are also contemplated by this disclosure. In order to create an electrical connection between imager housing 14 and grip housing 15, it is preferable that cable 16 carries electrical wiring therethrough. Preferably, cable 16 is made of two cable parts 16A, 16B, each part being preferably made of spring-winded coil cable covered with a shrink wrapping. Accordingly it is necessary to provide an electric connection between cable parts 16A, 16B in order to transmit the video signal from imager housing 14 to grip housing 15.

Accordingly, a two-part connector 16F, 16M may be provided between cable parts 16A, 16B. Preferably the connector will have a male plug 16MP that can be inserted into receptacle 16FR. Male plug 16MP may be a 1/8^{th} inch stereo plug with four terminals. Persons skilled in the art will recognize that such plug is preferably cylindrical, and can be rotated about its longitudinal axis, allowing cable part 16B to be rotated relative to cable part 16A. Preferably, connector parts 16F, 16M have respective casings 16FF and 16MF that are electrically connected to cable parts 16A, 16B.

Persons skilled in the art will recognize that a similar connection may be established between cable part 16A and grip housing 15 if so desired. Providing such connection between cable part 16A and grip housing 15 will enable end users to connect several cable parts in between grip housing 15 and cable part 16B.

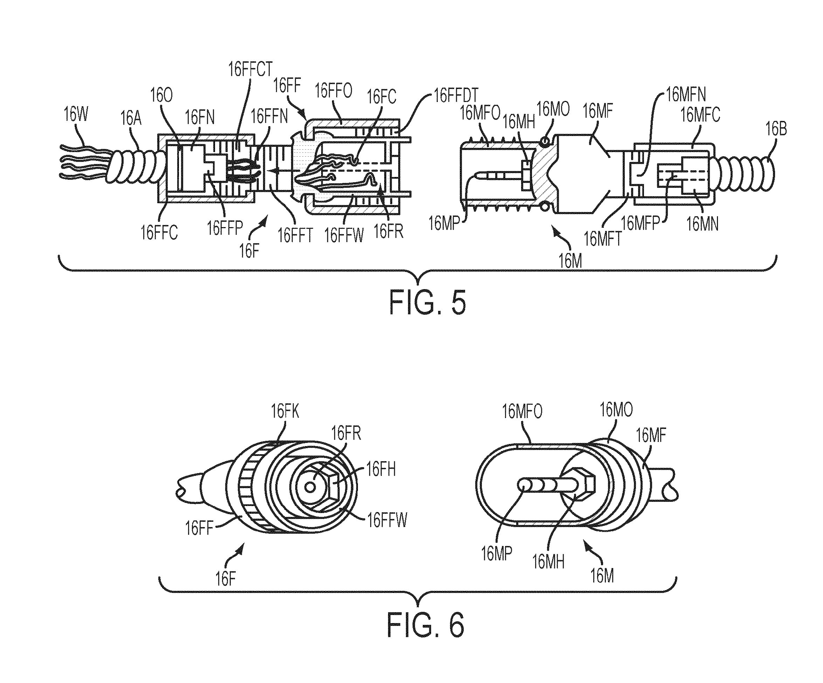

A second embodiment of connector parts 16F, 16M is shown in FIGS. 5-6, where like numerals refer to like parts. Male connector part 16M preferably has a ferrule 16MN press-fit onto cable part 16B. Ferrule 16MN may be made of conductive nylon, thus electrically connecting ferrule 16MN with cable part 16B.

Ferrule 16MN is preferably hollow so that wires connected to male plug 16MP can extend therethrough into cable part 16B. A casing sleeve 16MFC may be rotatably captured between ferrule 16MN and cable part 16B. An 0-ring may be disposed between casing sleeve 16MFC and ferrule 16MN for maintaining the axial position of casing sleeve 16MFC relative to ferrule 16MN.

Ferrule 16MN may have a protrusion 16MFP, which engages a notch 16MFN in casing 16MF. Casing 16MF preferably has threads 16MFT near notch 16MFN. Casing sleeve 16MFC preferably has threads that engage threads 16MFT, capturing casing 16MF. Casing 16MF and casing sleeve 16MFC are preferably made of aluminum.

Male plug 16MP is preferably supported by casing 16MF. Casing 16MF may have a wall 16MFO surrounding male plug 16MP. Wall 16MFO may have threads on its outer surface.

Male plug 16MP may have a molded hex-shaped protrusion 16MH. Persons skilled in the art will recognize that other shapes can be used for protrusion 16MH.

Similarly, female connector part 16F preferably has a ferrule 16FN press-fit onto cable part 16A. Ferrule 16FN may be made of conductive nylon, thus electrically connecting ferrule 16FN with cable part 16A.

Ferrule 16FN is preferably hollow so that wires 16F connected to female receptacle 16FR can extend therethrough into cable part 16A. A casing sleeve 16FFC may be rotatably captured between ferrule 16FN and cable part 16A. An O-ring 160 may be disposed between casing sleeve 16FFC and ferrule 16FN for maintaining the axial position of casing sleeve 16FFC relative to ferrule 16FN.

Ferrule 16FN may have a protrusion 16FFP, which engages a notch 16FFN in casing 16FF. Casing 16FF preferably has threads 16FFT near notch 16FFN. Casing sleeve 16FFC preferably has threads 16FFCT that engage threads 16FFT, capturing casing 16FF. Casing 16FF and casing sleeve 16FFC are preferably made of aluminum.

Female receptacle 16FR is preferably supported by casing 16FF. Female receptacle 16FR is surrounded by a wall 16FFW, which contains the different electrical connectors 16FC that would contact the different sections of male plug 16MP, when male plug 16MP is inserted into female receptacle 16FR.

Wall 16FFW may also form a hex-shaped receptacle 16FH for receiving protrusion 16MH. Accordingly, when male plug 16MP is electrically connected to female receptacle 16FR, protrusion 16 is nested within receptacle 16FH. Such arrangement prevents male plug 16MP (and thus cable part 16B) from rotating along its longitudinal axis relative to female receptacle 16FR (and thus cable part 16A). As mentioned above, other shapes can be used for protrusion 16MH. Preferably, receptacle 16FH is shaped so as to receive protrusion 16MH.

Casing 16FF may have a wall 16FFO surrounding female receptacle 16FR. Wall 16MFO may have threads on its outer surface. Wall 16FFO preferably has threads 16FFOT disposed on its inner surface. Threads 16FFOT preferably engage the threads disposed on the outer surface of wall 16MFO. Accordingly, when male plug 16MP is electrically connected to female receptacle 16FR, the user can rotate casing 16FF to threadingly engage wall 16MFO, locking connector parts 16F, 16M.

Persons skilled in the art will recognize that the same result can be achieved with other arrangements, such as providing threads 16FFOT on an outer surface of wall 16FFW, while providing connector part 16M with a rototable casing that can threadingly engage wall 16FFW.

Persons skilled in the art will recognize that an O-ring 16MO may be disposed on casing 16MF, preferably between casings 16MF and 16FF, to limit the amount of fluid entering the connection of connector parts 16F, 16M.

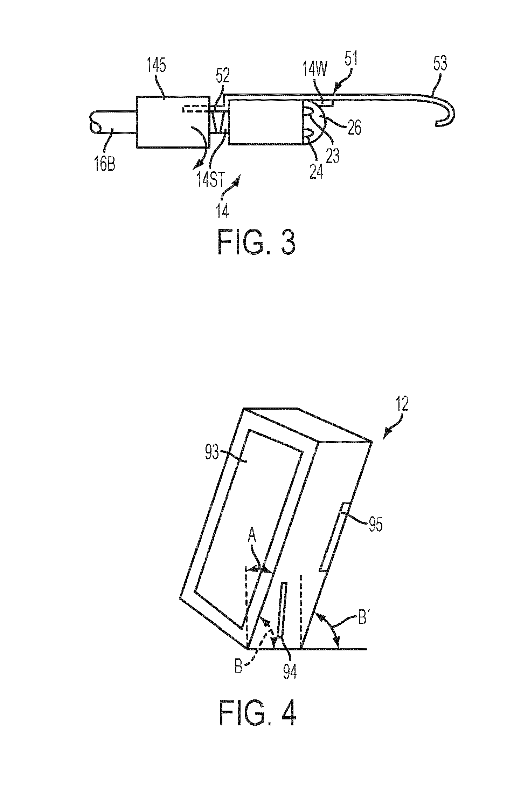

Referring to FIGS. 1 and 3, the imager housing 14 is preferably coupled to a distal end of the cable 16. In the exemplary embodiment, the imager housing 14 is a substantially cylindrical shape that is concentrically aligned with the cable 16. However, it is envisioned that the imager housing 14 may take other shapes. In any case, an outer diameter of the cylindrical imager housing 14 may be preferably sized to be substantially equal to or less than the outer diameter of the cable 16.

With reference to FIGS. 1-3, the imager housing 14 is configured to house an imaging device 22 and one or more light sources 24. The imaging device 22 is preferably embedded in an outwardly facing end of the imager housing 14. The imaging device 22 is operable to capture an image of a viewing area proximate to the outwardly facing end of the imager housing 14.

The imaging device 22 may be implemented using a charge-coupled device (CCD), a CMOS-based image sensor, a digital image sensor, an infrared camera, or other types of commercially available imaging devices. Image data is focused onto the imaging device 22 by a lens assembly 23 positioned adjacent to the imaging device 22.

With continued reference to FIGS. 1-3, light sources 24 may be a laser or two light emitting diodes (LEDs) are disposed along the perimeter of the imaging device 22. The LEDs protrude outwardly from the circuit board such that the imaging device 22 and lens assembly 23 is recessed between the two LEDs. The LEDs may optionally be connected to a separate circuit board residing in the camera head. Alternatively, the LEDs 24 may be recessed behind the imaging device 22 and/or lens assembly 23, such that light from the LEDs is transferred or piped to an emitting point which extends above and beyond the imaging device 22.

Persons skilled in the art may recognize that using a laser as a light source 24 can provide a reference mark within an image generated by the imager housing 14. Alternatively, imager housing 14 may also carry a receptor for receiving the reflection of the laser light. Such receptor can generate data and/or calculate the distance between the imager housing 14 and the point of reflection.

A transparent cap 26 preferably encloses these components within the imager housing 14. For instance, the cap 26 may be made of an acrylic material that enables light to project from the LEDs into the viewing area and return from the viewing area to the imaging device. Other types of durable transparent material may be used in place of acrylic.

In one exemplary embodiment, the imager housing 14 couples to the cable 16 by way of a threaded sleeve 14ST integrally formed at one end of the imager housing 14. The threaded sleeve 14ST on the imager housing 14 screws into a grooved portion from along an interior surface of a coupling formed on the distal end of the flexible cable. The sleeve and coupling each provide an axial passageway for a plurality of wires that are electrically connected between the circuit board in the imager housing and the display housing. The plurality of wires may or may not be further encased in a protective cable.

With reference to FIGS. 1 and 3, an attachment 51 may be removably coupled to the imager housing 14. The attachment 51 is generally comprised of a finger portion 53 which extends in parallel to the axis of the imager housing 14 and beyond an outwardly facing end of the imager housing 14, and an end 52 that may be inserted into a slot (not shown) on threaded sleeve 14ST. A capture sleeve 14S threadingly engaging threaded sleeve 14ST may be rotated along the threads of threaded sleeve to capture the end 52 between capture sleeve 14S and imager housing 14.

A distal end of the finger portion 53 may be further configured to retrieve or otherwise manipulate objects proximate to the end of the imager housing 14. For instance, the attachment 51 may be configured with a hook as shown in FIG. 3 or with a magnet. In another instance, the attachment may be a mirror. Other configurations, such as a loop, lance, or cutting device, are also contemplated by this disclosure. Other attachments may include a motorized brush and/or a vacuum tube. Imager housing 14 may be provided with a support wall 14W disposed underneath and supporting attachment 51. Persons skilled in the art will recognize that such support wall 14W will help distribute forces acting upon attachment 51 along at least a portion of imager housing 14.

Referring to FIGS. 1-2, the grip housing 15 is coupled to a proximate end of the cable 16. In an exemplary embodiment, the grip housing 15 is in the shape of a pistol. Specifically, the grip housing 15 includes a handle portion 71 configured to be grasped by an operator of the device and a protruding portion 72 extending away from the user when grasped by the user, such that the protruding portion forms an obtuse angle relative to the handle portion of the housing display. Other handheld configurations for the display housing also fall within the broader aspects of this disclosure.

Grip housing 15 may carry a video transmitter 75 that is connected to imager housing 14. In the exemplary embodiment, the imager housing 14 is connected by a four-wire twisted pair cable to the video transmitter 75. Functions for each wire are specified as follows: a power wire for delivering electrical power to the imaging device, a video wire for transporting the captured image data (e.g., a NTSC signal) from the imager back to the interface board, a control signal for varying the intensity of the light source and a ground connection. It is envisioned that more or less wires may be needed to support different functionalities.

Once powered on, the imaging device 22 begins capturing images and transmitting the image data as a video signal to video transmitter 75. The video transmitter 75 transmits wirelessly the video signal to a display housing 12 which may be attached to grip portion 15.

The video signal is received and decoded by video receiver 92. This decoded signal is passed through another interface to the display 93. The display 93 is then operable to display the video images to the operator. Persons skilled in the art will recognize that display 93 may be an LCD display. Furthermore, persons skilled in the art will recognize that video receiver 92 and display 93 are preferably disposed in display housing 12.

As mentioned above, display housing 12 may be attached to grip housing 15. Preferably display housing 12 is detachably provided on grip housing 15. Accordingly it is preferable to provide a battery 98 for powering the video receiver 92, display 93, as well as processor 97 (discussed below). Battery 98 may be a rechargeable lithium battery.

Display housing 12 may have magnets 95 to engage the display housing 12 to grip housing 15. Persons skilled in the art will recognize that providing magnets 95 on display housing 12 is advantageous as it allows the user to attach display housing 12 on ferrous beams at the jobsite, separate from grip housing 15. Alternatively, other attachment means can be used instead of magnets 95, such as snap-and-hook attachments, suction cups, tape, etc.

Persons skilled in the art will recognize that display housing 12 may include controls for the contrast of the display device 93 or for a zoom function of the image transmitted by the imaging device 14.

In an alternative embodiment, the inspection device 10 may provide an image self-righting feature. As the imager housing 12 is pushed into inspection areas, it may get twisted so that the images displayed to the operator are disoriented. To orientate the images, an accelerometer (not shown) is placed in the imager housing 14. The accelerometer is operable to report the position of the imager housing 14 in relation to a sensed gravity vector. Given the position data and the image data, a processor 97 residing in the display housing 12 can apply a known rotation algorithm (e.g., rotation matrix) to the image data. In this way, the image data is always presented upright to the operator.

Processor 97 may be connected to a storage memory 94. The storage memory 94 may be in the form of on-board flash memory or removable memory, such as an SD card which could be readable by a computer.

For best ergonomics, it is preferable to provide display 93 at inclined angle. Preferably, display 93 is at an acute angle A relative to a vertical plane. It is preferable that the angle A be between about 30 degrees and 60 degrees. Similarly, display 93 may be at an acute angle B relative to a horizontal plane. It is preferable that the angle B be between about 30 degrees and 60 degrees.

Persons skilled in the art will recognize that it may be preferable that the rear wall of display housing 12 to be inclined at an acute angle B' relative to a horizontal plane. Preferably angles B, B' are substantially equal.

Referring to FIGS. 1-2, a power tool battery pack 76 may be attached to grip housing 15. Such power tool battery pack 76 may be a slide pack, such as the ones described in US Patent Nos. RE40,681 and 6,057,608, which are wholly incorporated herein by reference, or a tower pack, such as the one described in US Patent No. 5,144,217, which is wholly incorporated herein by reference. Power tool battery pack 76 preferably powers video transmitter 75, imager 22 and light sources 24. In addition, it is preferable that a connection is established when display housing 12 is disposed on grip housing 15 so that power tool battery pack 76 can charge battery 98.

The following description is merely exemplary in nature and is not intended to limit the present disclosure, application, or uses.

## Claims

1. A remote inspection device comprising:
an imager housing with an imaging device disposed therein;
a grip housing;
a cable connecting the imager and grip housings;
a display housing removably attached to the grip housing, the display housing including a battery and a display for showing images generated by the imager device; and
a power tool battery pack removably attached to the grip housing.

2. The remote inspection device of Claim 1, wherein the battery in the display housing is charged by the power tool battery pack.

3. The remote inspection device of Claim 1, wherein the imager housing carries a light source.

4. The remote inspection device of Claim 1, wherein a video transmitter sends information generated by the imager device to the display housing.

5. The remote inspection device of Claim 4, wherein the video transmitter is disposed in the grip housing.

6. The remote inspection device of Claim 1, wherein the cable electrically connects to the imager device to the power tool battery pack.

7. The remote inspection device of Claim 4, wherein the display housing further comprises an accelerometer.

8. The remote inspection device of Claim 1, wherein the display housing further comprises a processor and a memory connected to the processor.

9. The remote inspection device of Claim 1, wherein the cable has a first portion attached to the grip housing and a second portion attached to the imager housing, the first and second portions being electrically connectable.

10. The remote inspection device of Claim 1, wherein the imager housing can support an accessory thereon.

11. The remote inspection device of Claim 1, wherein the display housing further comprises magnets.
